Europäisches Patentamt

European Patent Office

Office européen des brevets

(11) Veröffentlichungsnummer: **0 106 955**
**B1**

(12) **EUROPÄISCHE PATENTSCHRIFT**

(45) Veröffentlichungstag der Patentschrift:
20.04.88

(51) Int. Cl.⁴: **F 02 D 31/00,** F 02 D 41/16,
F 02 D 33/02

(21) Anmeldenummer: **83107723.5**

(22) Anmeldetag: **05.08.83**

(54) Verfahren zur Regelung der Leerlauf-Drehzahl von Brennkraftmaschinen.

(30) Priorität: **23.09.82 DE 3235186**

(43) Veröffentlichungstag der Anmeldung:
**02.05.84 Patentblatt 84/18**

(45) Bekanntmachung des Hinweises auf die Patenterteilung:
**20.04.88 Patentblatt 88/16**

(84) Benannte Vertragsstaaten:
**DE FR GB**

(56) Entgegenhaltungen:
**DE - A - 2 703 750**
**FR - A - 2 443 580**
**GB - A - 2 051 420**
**GB - A - 2 085 619**
**US - A - 4 031 866**
**US - A - 4 036 186**

(73) Patentinhaber: **ROBERT BOSCH GMBH, Postfach 50,
D-7000 Stuttgart 1 (DE)**

(72) Erfinder: **Braun, Günter, Uhlandstrasse 8,
D-7141 Freiberg a.N. (DE)**
Erfinder: **Kratt, Alfred, Dipl.-Ing., Gaisengasse 2,
D-7218 Trossingen (DE)**
Erfinder: **Schleicher, Rolf, Erlenweg 5, D-7022 Leinfelden
(DE)**

ACTORUM AG

## Beschreibung

Stand der Technik

Die Erfindung betrifft ein Verfahren zur Regelung der Leerlauf-Drehzahl von Brennkraftmaschinen nach der Gattung des unabhängigen Patentanspruches. Aus der DE-A 3 039 435 ist eine Einrichtung bekannt, mit deren Hilfe die Leerlaufdrehzahl einer Brennkraftmaschine geregelt werden kann. Es hat sich jedoch gezeigt, dass sich insbesondere bei zu fettem Luft-Kraftstoff-Gemisch (Kraftstoffanteil über den stöchiometrischen Wert) Drehzahlschwankungen ausbilden, die sich derart aufschaukeln können, dass die Brennkraftmaschine zum Stillstand kommt. Bei eingekuppeltem Getriebegang kann insbesondere nach einem kurzen Gasstoss ein sehr starkes Rukkeln auftreten. Diese Drehzahlschwankungen werden durch den Leerlaufdrehzahl-Regler, der PID-Verhalten zeigt, verursacht oder verstärkt.

Aus der FR-A- 2 443 580 ist eine Einrichtung zur Laufruheregelung einer Brennkraftmaschine im Leerlauf-Betrieb bekannt. Drehzahländerungen werden erfasst und mit einem Schwellenwert verglichen. Bei Überschreiten des Schwellenwertes wird das Kraftstoff-Luft-Verhältnis so beeinflusst, dass den Drehzahlschwankungen entgegengewirkt wird.

Ausserdem ist aus der US-A 4 036 186 bekannt, dass zur Steuerung der Kraftstoffmenge bei einer Brennkraftmaschine nicht nur in die Kraftstoffzufuhr, sondern auch in die der Brennkraftmaschine zugeführte Luftmenge eingegriffen werden kann. Weiterhin ist aus der DE-A 2 803 750 bekannt, Schwankungen der Ist-Drehzahl einem D-Regler zuzuführen.

Dem bekannten Stand der Technik haftet der Nachteil an, dass je nach Wahl der Regelparameter der gesamte Regelkreis zu Instabilitäten neigt. Solche Instabilitäten führen dann zum «Sägen» der Leerlaufdrehzahl. Aufgabe der Erfindung ist es, ein Verfahren anzugeben, mit dem sich solche Instabilitäten beseitigen lassen.

Vorteile der Erfindung

Das erfindungsgemässe Verfahren mit den kennzeichnenden Merkmalen des unabhängigen Anspruchs hat demgegenüber den Vorteil, dass bei Erkennung von Drehzahlschwankungen oder von Ruckeln bzw. zu fettem Gemisch Gegenmassnahmen ergriffen werden. Diese Gegenmassnahmen sind die Reduzierung der Regelparameter oder wenigstens eines Regelparameters auf einen kleineren Wert, die Erhöhung des Sollwerts für die Leerlauf-Drehzahl. Diese Massnahmen können einzeln oder untereinander kombiniert vorgesehen werden. Es erfolgt dadurch eine sofortige Reduzierung der Drehzahlschwankungen, deren Wirkung umso stärker ist, je mehr und je stärker diese Massnahmen getroffen werden.

Durch die in den abhängigen Patentansprüchen aufgeführten Massnahmen sind vorteilhafte Weiterbildungen und Verbesserungen des im unabhängigen Patentanspruch angegebenen Verfahrens möglich.

Zur Erkennung des Auftretens der zu verhindernden Drehzahlschwankungen, bzw. zur Erkennung der Gefahr eines solchen Auftretens, wird vorteilhaft eine Messvorrichtung für Drehzahlschwankungen oder zu erwartende Drehzahlschwankungen wegen zu fettem Gemisch vorgesehen, durch die die genannten Gegenmassnahmen eingeleitet werden, wenn die Amplituden der Drehzahlschwankungen über einem vorgegebenen Wert liegen und wechselndes Vorzeichen aufweisen, wenn dn/dt über einen vorgegebenen Wert ansteigt und wechselndes Vorzeichen aufweist oder wenn das Signal einer Abgassonde einen Grenzwert im fetten Bereich über eine bestimmte Zeitspanne unterschreitet. Auch diese Erkennungsmassnahmen können einzeln oder kombiniert getroffen werden.

Die genannten Antiruckelfunktionen bzw. «Antisägefunktionen» werden jedoch sofort zurückgenommen, wenn die Drosselklappe im Ansaugrohr der Brennkraftmaschine aus der Leerlaufstellung ausgelenkt wird oder wenn die Ist-Drehzahl um einen vorgegebenen Wert von der Soll-Drehzahl abweicht.

Zeichnung

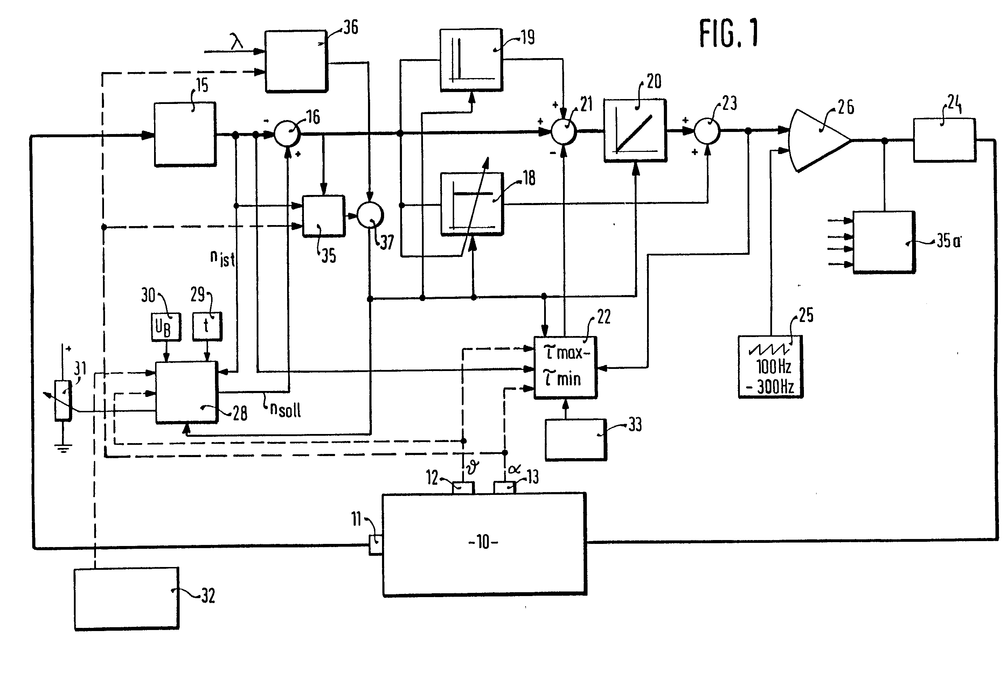

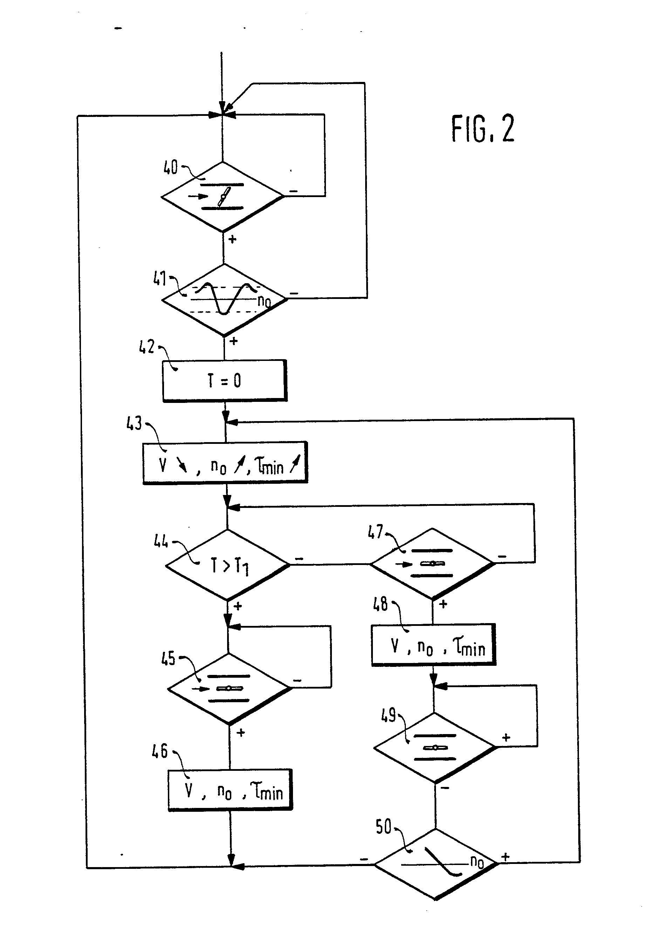

Ein Ausführungsbeispiel der Erfindung ist in der Zeichnung dargestellt und in der nachfolgenden Beschreibung näher erläutert. Es zeigen Figur 1 ein Ausführungsbeispiel der Erfindung im Blockschaltbild und Figur 2 ein Funktionsdiagramm zur Erläuterung der Wirkungsweise.

Beschreibung des Ausführungsbeispiels

Das Ausführungsbeispiel betrifft eine Vorrichtung zur Leerlauf-Drehzahlregelung bei einer fremdgezündeten Brennkraftmaschine. In Figur 1 ist mit 10 eine Brennkraftmaschine bezeichnet, der Messwertaufnehmer für die Drehzahl 11, für die Temperatur 12 sowie für den Drosselklappen-Stellungswinkel 13 zugeordnet sind. Das Drehzahlsignal vom Messwertaufnehmer 11 gelangt zu einem Frequenz-Spannungs-Wandler 15 und anschliessend zu einer Vergleichsstelle 16 für den Drehzahl Soll-Ist-Vergleich. Es folgt der eigentliche Regler, der aus drei Stufen 18, 19 und 20 mit P-, D- und I-Charakteristik besteht. Zwischen dem Vergleichspunkt 16 und dem I-Regler 20 befindet sich noch ein Koppelpunkt 21, der den Ausgang des D-Reglers 19 mit dem Ausgangswert des Vergleichers 16 additiv verknüpft und davon ein Begrenzungssignal von einem Begrenzungsregler 22 abzieht. Sowohl der I-, als auch der P-Regler 18 arbeiten ausgangsseitig auf ein Verknüpfungsglied 23. Sein Ausgangssignal dient als Führungssignal für ein Stellglied 24, jedoch wird es im Hinblick auf das gewünschte Takten des Stellglieds noch mit dem Ausgangssignal eines Sägezahngenerators der Frequenz von etwa 100 bis 300 Hertz (25) in einem Vergleicher 26 gekoppelt. Ausgangsseitig wirkt das Stellglied 24 dergestalt auf die Brennkraftmaschine ein, dass sich über die Regelung des Luftdurchsatzes im Ansaugrohr die gewünschte Leerlauf-Drehzahl angibt.

Der Pfeil im Block des P-Reglers 18 deutet auf eine mögliche Veränderung des Verstärkungsfaktors je nach Eingangssignalhöhe hin. Des weiteren kann die Integrationskonstante des I-Reglers in Auf- und Abwärtsrichtung als Funktion der Drehzahlabweichung und der Temperatur beliebig gestaltet werden.

Eine Drehzahlsollwert-Steuerstufe 28 liefert ausgangsseitig ein Signal an die Vergleichsstelle 16. Der zur Verfügung gestellte Drehzahl-Sollwert hängt z.B. von der Augenblicks-Drehzahl, der Temperatur, der Zeit, der augenblicklichen Versorgungsspannung und dem gewünschten Drehzahl-Sollwert ab, darüber hinaus kann z.B. noch ein Getriebesteuersignal verarbeitet werden, um Drehzahleinbrüche zu vermeiden, wenn bei Automatikgetrieben von Stellung «N» in Stellung «D» geschaltet wird. Um alle diese Einflussgrössen berücksichtigen zu können, steht die Drehzahl-Sollwertstufe 28 mit den Ausgängen des Frequenz-Spannungs-Wandlers 15, des Temperaturgebers 12, einem Zeitgeber 29 sowie selbstverständlich mit der Batteriespannungsquelle 30 in Verbindung. Ein Potentiometer 31 steht stellvertretend für ein Einstellmittel für die gewünschte Solldrehzahl. Schliesslich ist mit 32 ein Sollwertschalter bezeichnet, dessen Stellung z.B. vom jeweiligen Schaltzustand des Getriebes abhängt.

Auch der Begrenzungsregler 22 erhält neben einem Eingangssignal vom Ausgang der Koppelstufe 23 für den eigentlichen Regelvorgang zusätzlich Impulse bezüglich der Drehzahl, sowie der Temperatur und der jeweiligen Drosselklappenstellung, ausserdem von einem Sollwertschalter 33, der mit dem Sollwertschalter 32 identisch sein kann, jedoch nicht muss. Wesentlich ist, dass die Begrenzungsregelung sowohl im Leerlauffall, als auch bei geöffneter Drosselklappe arbeitet und dann wenigstens drehzahl- und temperaturabhängig diese Begrenzung steuert.

Die bis hierher beschriebenen Baugruppen sind aus dem eingangs genannten Stand der Technik bekannt, auf den hier ausdrücklich Bezug genommen wird und dessen Inhalt hierdurch zur Offenbarung für die vorliegenden Anmeldung wird. Da die Wirkungsweise und verschiedene Funktionsverläufe dort sehr ausführlich beschrieben sind, soll hier nicht weiter darauf eingegangen werden.

Neu hinzu kommt nunmehr eine Mess- und Auswertevorrichtung für Drehzahlschwankungen 35, der eingangsseitig der Istwert und die Regelabweichung von der Vergleichsstelle 16 sowie das Drosselklappen-Signal zugeführt sind. Weiterhin ist eine Auswertevorrichtung 36 für das Ausgangssignal λ einer Abgassonde vorgesehen, der ebenfalls das Drosselklappen-Signal zugeführt ist. Beide Vorrichtungen 35, 36 sind ausgangsseitig zu einer Vergleichsstelle 37 zusammengeführt, die auf den Regler 18 bis 20 im Sinne einer Verringerung des Verstärkungsfaktors, auf die Drehzahlsollwert-Steuerstufe 28 im Sinne einer Erhöhung des Drehzahl-Sollwerts sowie auf den Begrenzungsregler 22 im Sinne einer Erhöhung der unteren Regelbereichsbegrenzung (τ min) einwirkt.

Die Wirkungsweise der neu hinzugekommenen Anordnung 35 bis 37 besteht im wesentlichen darin, ein unerwünschtes Aufschaukeln von Drehzahlschwankungen durch den Regelkreis der Leerlauf-Drehzahlregelung zu verhindern. Solche Schwankungen werden in der Mess- und Auswertevorrichtung für Drehzahlschwankungen 35 erfasst. Diese Drehzahlerfassung erfolgt durch eine eingebaute Schwellwerterkennung, die ein Überschreiten der Regelabweichung über einen oberen und unter einen unteren Schwellwert erkennt. Treten innerhalb einer vorbestimmten Zeit nacheinander solche Über- und Unterschreitungen auf, so wird ein Ausgangssignal erzeugt. Ein solches Ausgangssignal kann beispielsweise auch erst dann ausgelöst werden, wenn eine vorbestimmte Anzahl solcher Über- bzw. Unterschreitungen erfolgt. Als zusätzliche oder alternative Erkennung für Drehzahlschwankungen kann durch eine eingebaute Differenzierstufe die Ableitung dn/dt vom Drehzahl-Istwert gebildet werden. Der ermittelte Wert wird wiederum einer eingebauten Schwellwertvorrichtung zugeführt und daraufhin untersucht, ob nacheinander obere (positive) und untere (negative) Werte über- bzw. unterschritten werden. Auch können Forderungen bezüglich der Höhe des Schwellwerts, der Zahl der Über- bzw. Unterschreitungen sowie der vorgeschriebenen Bezugszeit beliebig vorgeschrieben und realisiert werden. Weitere Möglichkeiten der Erkennung von Drehzahlschwankungen sind in vielfältiger Form denkbar. Dabei ist lediglich wesentlich, dass periodische drehzahlschwankungen nach möglichst kurzer Zeit eindeutig erfasst werden können.

Über die Auswertevorrichtung 36 für λ-Signale werden Drehzahlschwankungen infolge eines zu fetten Luft-Kraftstoff-Gemisches indirekt erfasst. Für das λ-Signal wird wiederum ein Schwellwert vorgesehen, deren Unterschreitung über einen bestimmten Zeitraum (λ-Werte kleiner als 1 zeigen ein zu fettes Gemisch an) ein Auslösesignal bzw. Ansprechsignal bewirken. Diese Schwellwerterkennung ist entweder in der Auswertevorrichtung 36 vorgesehen, oder – bei Vorliegen einer Brennkraftmaschine mit λ-Regelung – ohnehin im System bereits realisiert.

Die genannten und beschriebenen Methoden zur Erkennung bzw. Vorbeugung von Drehzahlschwankungen können alternativ oder in beliebigen Kombinationen vorgesehen sein.

Spricht eine der Vorrichtungen 35, 36 an, so werden die bereits beschriebenen Auswirkungen auf den Regler 18 bis 20, die Drehzahlsollwert-Steuerstufe 28 sowie den Begrenzungsregler 22 ausgelöst. Diese Massnahmen dienen zum einen der Abschwächung der Regeleigenschaften und zum anderen der Verlagerung in unkritischere Regelbereiche, wodurch die Drehzahlschwankungen verringert bzw. verhindert werden. Dabei kann das Verstellen der genannten Grössen entweder auf vorgesehene feste Werte oder aber kontinuierlich solange erfolgen, bis die Drehzahlschwankungen wegbleiben. Dabei kann z.B. die Reduzierung des Verstärkungsfaktors bzw. der Verstärkungsfaktoren des Reglers 18 bis 20 bis zum Wert Null hin erfolgen. Erfolgt die Verstellung auf einen vorgesehenen Wert, dann kann diese Verstellung beispielsweise auch temperaturabhängig erfolgen.

Die genannten Einwirkungen auf den Regler 18 bis 20 und die Drehzahlsollwertsteuerstufe 28 zur Leerlauf-Drehzahlregelung können wiederum einzeln oder in beliebigen Kombinationen erfolgen. Auch ein nacheinanderfolgendes Wirksamwerden der verschiedenen Massnahmen kann vorteilhaft vorgesehen werden, wobei die nächste Massnahme jeweils dann ergriffen wird, wenn die zuvor ergriffene Massnahme nicht zum erwünschten Erfolg führt.

Der in Figur 2 dargestellte Funktionsablauf beschreibt detaillierter die genannten Funktionen. Dabei werden die Vorrichtungen 35, 36, wie auch die gesamte, in Figur 1 dargestellte Anordnung vorzugsweise als Mikrorechner realisiert. Zunächst wird abgefragt, ob sich die Drosselklappe in Leerlaufstellung befindet (40). Trifft dies zu, so wird gemäss dem zuvor Beschriebenen (Vorrichtungen 35 bzw. 36) abgefragt, ob Drehzahlschwankungen vorliegen (41). Ist dies der Fall, dann wird ein Zeitzähler zurückgesetzt (42) und die Verstellung der Verstärkungsfaktoren V, der Soll-Drehzahl no und der unteren Regelbereichsbegrenzung $\tau$ min entsprechend dem zuvor Beschriebenen vorgenommen (43). Anschliessend wird abgefragt, ob eine festgelegte Zeit T1 von beispielsweise 2,5 Minuten abgelaufen ist (44). Ist dies der Fall, so wird die Stellung der Drosselklappe erneut abgefragt (45). Bei vorliegender Leerlaufstellung wird in einer Warteschleife abgewartet, bis die Drosselklappe sich öffnet. Danach werden die genannten Parameter V, no, $\tau$ min auf ihren ursprünglichen Wert zurückgestellt (46) und der Arbeitszyklus erneut durchlaufen.

Wird dagegen die Drosselklappe geöffnet, bevor die Zeit T1 abgelaufen ist (47) dann werden zwar die genannten Parameter V, no, $\tau$ min ebenfalls wieder auf ihren ursprünglichen Wert eingestellt (48), jedoch wird dann abgewartet, bis die Drosselklappe wieder in die Leerlaufstellung zurückgeht (49). Erfolgt jetzt ein Unterschreiten der Solldrehzahl no um einen festgelegten Betrag (50), dann erfolgt erneut eine Verstellung dieser Parameter (43). Erfolgt kein Unterschwingen unter die Solldrehzahl no, dann erfolgt der gesamte Arbeitsablauf von vorn.

Alternativ oder zusätzlich zum Kriterium des Öffnens der Drosselklappe kann noch das Kriterium der Überschreitung eines vorgegebenen Drehzahlwerts eintreten. Auch in diesem Fall können die genannten Parameter V, no und $\tau$ min auf ihren ursprünglichen Wert zurückgeführt werden.

Mit 35a ist eine Stellgliedsteuerstufe gekennzeichnet.

## Patentansprüche

1. Verfahren zur Regelung der Leerlauf-Drehzahl von Brennkraftmaschinen, deren Drehzahl von einer im Saugrohr angeordneten Drosselklappe gesteuert wird, mit einem von einer Regeleinrichtung ansteuerbaren elektrischen Stellglied (24) zum Einstellen der Ansaugluftmenge in der Leerlaufstellung der Drosselklappe, mit einem Vergleich für Soll- und Ist-Drehzahl sowie einer nachfolgenden, PID-Verhalten aufweisenden Regelung (18, 19, 20), dadurch gekennzeichnet, dass bei Vorliegen von Drehzahlschwankungen oder bei zu fettem Luft-Kraftstoff-Gemisch zur Stabilisierung des Regelkreises wenigstens einer der Regelparameter (P-, I- oder D-Anteil) auf einem kleineren Wert abgesenkt und/oder der Sollwert für die Leerlaufdrehzahl erhöht wird.

2. Verfahren zur Regelung der Leerlaufdrehzahl von Brennkraftmaschinen nach Anspruch 1, dadurch gekennzeichnet, dass bei Vorliegen von Drehzahlschwankungen oder eines zu fetten Luft-Kraftstoff-Gemisches die untere Regelbereichsbegrenzung angehoben wird.

3. Verfahren nach Anspruch 1 oder 2, dadurch gekennzeichnet, dass nach Vorliegen eines zu feten Kraftstof-Luft-Gemisches für eine bestimmte Zeitspanne in die Regelparameter eingegriffen wird.

4. Verfahren nach einem der Ansprüche 1 bis 3, dadurch gekennzeichnet, dass ein Ansprechsignal ausgelöst wird, wenn die Amplituden der Drehzahlschwankungen einen bestimmten Schwellwert überschreiten und die Drehzahlschwankungen das Vorzeichen wechseln.

5. Verfahren nach einem der Ansprüche 1 bis 4, dadurch gekennzeichnet, dass ein Ausgangssignal ausgelöst wird, wenn die Amplituden von dn/dt einen vorgegebenen Wert überschreiten und wechselndes Vorzeichen aufweisen.

6. Verfahren nach einem der Ansprüche 4 oder 5, dadurch gekennzeichnet, dass ein Ansprechsignal erst nach einer vorgegebenen Anzahl von Ansprechbedingungen während einer vorgegebenen Zeitspanne erfolgt.

7. Verfahren nach einem der vorhergehenden Ansprüche, dadurch gekennzeichnet, dass solange in die Parameter der Regler eingegriffen wird, solange ein Ansprechsignal vorliegt.

8. Verfahren nach einem der Ansprüche 1 bis 7, dadurch gekennzeichnet, dass bei Auslenkung der Drosselklappe aus der Leerlaufstellung nicht in die Regelparameter eingegriffen wird.

9. Verfahren nach Anspruch 7 oder 8, dadurch gekennzeichnet, dass für eine Abweichung zwischen Ist- und Solldrehzahl oberhalb eines bestimmten Wertes nicht in die Regelparameter eingegriffen wird.

10. Verfahren nach Anspruch 8 oder 9, dadurch gekennzeichnet, dass der Rückstellung der Drosselklappe in die Leerlaufstellung und anschliessender Unterschreitung der Leerlauf-Solldrehzahl unter einem vorgegebenen Wert die Massnahmen zur Vermeidung von Drehzahlschwankungen erneut wirksam werden.

## Claims

1. Method for controlling the idling speed of internal combustion engines whose rotational speed is controlled by a throttle butterfly located in the induction pipe, having an electrical adjustment element (24) controllable by a control device and used to adjust the induction air quantity in the idle position of the throttle butterfly, having a comparison for required and actual rotational speed and a subsequent control system (18, 19, 20) exhibiting PID behaviour, characterized in that – in the presence of rotational speed fluctuations or if there is an excessively rich air/fuel mixture – at least one of the control parameters (P, I or D part) is lowered to a smaller value and/or the required value for the idling speed is increased in order to stabilise the control circuit.

2. Method for controlling the idling speed of internal combustion engines according to Claim 1, characterized in that – in the presence of rotational speed fluctuations or an excessively rich air/fuel mixture – the lower control range limit is raised.

3. Method according to Claim 1 or 2, characterized in that after the presence of an excessively rich fuel/air mixture, action is taken on the control parameters for a certain period of time.

4. Method according to one of the Claims 1 to 3, characterized in that a response signal is initiated when the amplitudes of the rotational speed fluctuations exceed a certain theshold value and the rotational speed fluctuations alternate their sign.

5. Method according to one of the Claims 1 to 4, characterized in that an output signal is initiated when the amplitudes of dn/dt exceed a specified value and exhibit alternating signs.

6. Method according to one of the Claims 4 or 5, characterized in that a response signal only takes place after a specified number of response conditions during a specified period of time.

7. Method according to one of the preceding claims, characterized in that action is taken on the parameters of the control system as long as a response signal is present.

8. Method according to one of the Claims 1 to 7, characterized in that no action is taken on the control parameters in the case of deflection of the throttle butterfly away from the idling position.

9. Method according to Claim 7 or 8, characterized in that no action is taken on the control parameters for a deviation between the actual and required rotational speed above a certain value.

10. Method according to Claim 8 or 9, characterized in that on resetting the throttle butterfly into the idling position and when the rotational speed subsequently becomes less than the required idling speed by a specified amount, the measures for avoiding rotational speed fluctuations again become effective.

**Revendications**

1. Méthode de régulation de la vitesse de ralenti de moteurs à combustion interne, dont la vitesse de rotation est commandée par un clapet d'étranglement disposé dans la tubulure d'aspiration, avec un organe électrique de réglage (24) susceptible d'être commandé par un dispositif de réglage pour régler la quantité d'air aspirée dans la position de ralenti du clapet d'étranglement, avec une comparaison de la vitesse de rotation de consigne et de la vitesse de rotation réelle, ainsi qu'avec une régulation (18, 19, 20) branchée à la suite et présentant un comportement PID, méthode caractérisée en ce que lors de la présence de fluctuations de la vitesse de rotation, ou bien pour un mélange air-carburant trop riche, au moins un des paramètres de réglage (composantes P, I ou bien D) est abaissé à une valeur plus réduite et/ou la valeur de consigne pour la vitesse de rotation de ralenti est augmentée.

2. Méthode pour la régulation de la vitesse de rotation de ralenti de moteurs à combustion interne selon la revendication 1, caractérisée en ce que lorsqu'il y a des fluctuations de la vitesse de rotation ou bien un mélange air-combustible trop riche, la limitation inférieure de la zone de réglage est relevée.

3. Méthode selon la revendication 1 ou 2, caractérisée en ce qu'en présence d'un mélange carburant-air trop riche, on agit pendant un laps de temps déterminé sur les paramètres de réglage.

4. Méthode selon une des revendications 1 à 3, caractérisé en ce qu'un signal de réaction est déclenché lorsque les amplitudes des fluctuations de vitesse de rotation dépassent une valeur de seuil déterminée et que les signes des fluctuations de la vitesse de rotation changent.

5. Méthode selon une des revendications 1 à 4, caractérisé en ce qu'un signal de sortie est déclenché lorsque les amplitudes de dn/dt dépassent une valeur prédéfinie et changent de signes.

6. Méthode selon une des revendications 4 ou 5, caractérisée en ce qu'un signal de réaction n'est déclenché qu'après un nombre prédéfini de conditions de réaction pendant un laps de temps prédéfini.

7. Méthode selon une des précédentes revendications, caractérisée en ce que, tant que l'on agit sur les paramètres du régulateur, un signal de réaction est présent.

8. Méthode selon une des revendications 1 à 7, caractérisée en ce que, lorsque le clapet d'étranglement est dévié de sa position de ralenti, on n'agit pas sur le paramètre de réglage.

9. Méthode selon la revendication 7 ou 8, caractérisée en ce que, dans le cas d'un écart entre la vitesse de rotation et la vitesse de rotation de consigne dépassant une valeur déterminée, on n'agit pas sur les paramètres de réglage.

10. Méthode selon la revendication 8 ou 9, caractérisée en ce que, lors du rappel du clapet d'étranglement dans la position de ralenti et le franchissement vers le bas qui s'en suit de la valeur de consigne de la vitesse de rotation de ralenti, les mesures permettant d'éviter des fluctuations de la vitesse de rotation, sont à nouveau mises en œuvre au-dessous d'une valeur prédéfinie.

FIG. 1

0 106 955

FIG. 2